# EUROPÄISCHE PATENTSCHRIFT

(11) **EP 3 682 411 B1**
(45) Veröffentlichungstag und Bekanntmachung des Hinweises auf die Patenterteilung: **21.12.2022**
(21) Anmeldenummer: 18769147.2
(22) Anmeldetag: 11.09.2018
(51) Int. Cl.: H02J 3/00, H02J 3/46, H02J 3/38, G06Q 10/04, G06Q 50/06

(54) **STEUERUNG UND/ODER REGELUNG VON STROMERZEUGUNGSANLAGEN**
OPEN-LOOP AND/OR CLOSED-LOOP CONTROL OF POWER GENERATION INSTALLATIONS
COMMANDE ET/OU RÉGULATION D'INSTALLATIONS DE PRODUCTION DE L'ÉLECTRICITÉ

(30) Priorität: 11.09.2017 DE 102017120946
(43) Veröffentlichungstag der Anmeldung: 22.07.2020
(73) Patentinhaber: RWE Renewables GmbH, 45141 Essen (DE)
(72) Erfinder: THOMAS, Marx, 40235 Düsseldorf (DE)
(74) Vertreter: Cohausz & Florack
(86) Internationale Anmeldenummer: PCT/EP2018/074447
(87) Internationale Veröffentlichungsnummer: WO 2019/048701

(56) Entgegenhaltungen:
- EP-A2- 2 343 791
- EP-A2- 2 733 810
- US-A1- 2004 133 529
- US-A1- 2008 249 665
- US-A1- 2012 029 720
- US-A1- 2013 043 725
- US-A1- 2016 013 645
- US-A1- 2016 187 910

## Beschreibung

### Gebiet der Erfindung

Der Gegenstand betrifft ein Verfahren, eine Vorrichtung und ein System zur Steuerung und/oder Regelung von einer oder mehreren Stromerzeugungsanlagen, insbesondere zur Steuerung und/oder Regelung der Menge an erzeugter elektrischer Energie der einen oder mehreren Stromerzeugungsanlagen.

### Hintergrund der Erfindung

Zur Wahrung der Stabilität eines Stromnetz - insbesondere zum Aufrechterhalten der Frequenz des Stromnetzes - wird eine Über- bzw. Unterproduktion an Strom als auch ein Minder- bzw. Mehrbedarf an Strom an Stromverbrauchern über eine Regelenergie - auch mit dem Begriff "Ausgleichsenergie" bezeichnet - gesteuert und/oder geregelt. Regelenergie ist somit wichtig, um die Netzstabilität im Übertragungsnetz zu gewährleisten und beispielsweise um Stromausfällen vorzubeugen. Entsprechend kann die Regelenergie zusätzlich in das Stromnetz eingespeist, oder zusätzlicher Strom des Stromnetzes verbraucht werden. Wird Regelenergie angefordert bzw. benötigt, entsteht für die Teilnehmer eine Umlage.

Jeder Teilnehmer des Stromnetzes, der seinen erzeugten Strom in das Stromnetz einspeist bzw. aus dem Stromnetz entnimmt, muss dabei die Strommenge prognostizieren (eine sogenannte Longterm-Prognose), die von ihm (z. B. am Folgetag) in das Stromnetz eingespeist wird bzw. aus dem Stromnetz entnommen wird. Die Prognose der Menge an benötigter Regelenergie wird von den Teilnehmern beispielsweise täglich bzw. wöchentlich für Strom-Marktsegmente (z. B. Primärreserve, Sekundärreserve, Minutenreserve) abgegeben, jeweils für positive und negative Regelenergie. Wie viel Regelenergie überhaupt benötigt wird, wird beispielsweise auf Basis von historischen Daten bestimmt. Das Handeln und Erfassen der Menge an tatsächlich erzeugter elektrischer Energie erfolgt am sogenannten Ausgleichsenergiemarkt. An diesem wird ein Preis der für Strom gemäß einer Prognose zu zahlen ist, beispielsweise festgelegt und der Strom kann bereits an Stromverbraucher veräußert werden. Zudem werden am Ausgleichsenergiemarkt Daten hinsichtlich der innerhalb der prognostizierten Intervalle erzeugten Menge an Strom erfasst, so dass eine Abweichung gegenüber der Prognose bestimmt werden können.

Am Ausgleichsenergiemarkt wird hinsichtlich der Vergütung zwischen Vorhaltung und Erzeugung von Regelenergie unterschieden. Stromerzeuger geben beispielsweise Gebote für die Vorhaltung einer Menge an erzeugter elektrischer Energie, die sogenannte Reservekapazität (Leistungspreis), sowie beispielsweise ein zusätzliches Gebot für die Vergütung der tatsächlichen Erzeugung (Arbeitspreis) der elektrischen Energie ab.

Eine Besonderheit am Ausgleichsenergiemarkt ist das Pay-as-bid-Verfahren. Die Gebote auf dem Ausgleichsenergiemarkt werden dabei nur mit den tatsächlich gebotenen Preisen vergütet. Jeder Teilnehmer wird entsprechend bezahlt (pay) wie geboten wurde (as bid).

Im Gegensatz hierzu steht das Pay-as-clear-Verfahren. Dies stellt ein Einheitspreis-Verfahren dar. Unabhängig vom konkreten Gebot wird stets gemäß dem höchsten Gebot, der in der jeweiligen Ausschreibung bezuschlagt wurde, bezahlt.

Dabei ist es insbesondere seitens der Stromerzeuger von der Regelenergie gefordert, so genau wie möglich die prognostizierte Menge an erzeugter elektrischer Energie einzuhalten.

Wie bereits oben ausgeführt, sind aus dem Stand der Technik Lösungen bekannt, die die von dem Ausgleichsenergiemarkt geforderte Prognose auf Basis von historischen Daten treffen.

Aufgrund des stetig wachsenden Anteils an sogenannter erneuerbarer Energie ist eine Prognose der tatsächlich erzeugten Menge an elektrischer Energie mitunter schwierig. Als Beispiel seien Windenergieanlagen genannt, bei denen offensichtlich ist, dass der Wind, der zur Erzeugung an elektrischer Energie benötigt wird, variabel und nur schwer prognostizierbar lange im Voraus (z. B. Wochen oder Monate gemäß der sogenannten Longterm-Prognose) ist.

EP 2 733 810 A2 offenbart ein Verfahren zur Steuerung eines Stromnetzes, das eine Vielzahl von Stromerzeugungsanlagen, die mit einem Stromnetz verbunden sind, und eine Vielzahl von Stromspeicheranlägen, die mit den Stromerzeugungsanlagen verbunden sind, umfasst. Das Verfahren umfasst die Überwachung einer Produktionskapazität der Stromerzeugungsanlagen, die Überwachung einer Speicherkapazität der Stromspeicheranlagen und die Bestimmung eines optimalen Anlagensteuerungsplans auf der Grundlage der Speicherkapazität und der Produktionskapazität. Das Verfahren umfasst ferner das Betreiben des Stromnetzes gemäß dem Anlagensteuerungsplan, um Strom von den Stromerzeugungsanlagen in das Stromnetz einzuspeisen und/oder um Strom von den Stromerzeugungsanlagen zu den Stromspeicheranlagen zu übertragen und/oder um Strom von den Stromspeicheranlagen zu verbrauchen.

### Allgemeine Beschreibung einiger beispielhafter Ausführungsformen

Vor dem Hintergrund des dargestellten Standes der Technik ist es somit die Aufgabe, die beschriebenen Probleme zumindest teilweise zu verringern oder zu vermeiden, das heißt insbesondere eine Steuerung und/oder Regelung für Stromerzeugungsanlagen auszuführen und/oder durchzuführen, die so genau wie möglich die Menge an erzeugter elektrischer Energie in das Stromnetz einspeist, die für ein vorbestimmtes Intervall prognostiziert wurde.

Diese Aufgabe wird gegenständlich durch ein Verfahren mit den Merkmalen des Anspruchs 1 gelöst.

Gemäß einem ersten Aspekt der Erfindung wird ein Verfahren zur Steuerung und/oder Regelung der Menge an erzeugter elektrischer Energie von einer oder mehreren Stromerzeugungsanlagen beschrieben, durchgeführt von einer oder mehreren Vorrichtungen, das Verfahren umfassend:
- Erfassen einer Prognoseinformation indikativ für eine Menge an von einen oder mehreren Stromerzeugungsanlagen erzeugter elektrischer Energie, die innerhalb eines vorbestimmten Intervalls erzeugt wird;
- Erfassen einer Erzeugungsinformation repräsentativ für eine Menge an von den einen oder mehreren Stromerzeugungsanlagen erzeugter elektrischer Energie, wobei die Menge an der erzeugten elektrische Energie der produzierten Menge an elektrischer Energie von den einen oder mehreren Stromerzeugungsanlagen innerhalb des vorbestimmten Intervalls entspricht und/oder unmittelbar für das vorbestimmte Intervall prädiziert ist;
- Erfassen einer Regulierungsinformation indikativ für eine Über- oder Unterproduktion von von den einen oder mehreren Stromerzeugungsanlagen erzeugter elektrischer Energie für das vorbestimmte Intervall für den Fall, dass das bestimmte Intervall noch nicht abgelaufen ist und die gemäß der Prognoseinformation zu erzeugende Menge elektrischer Energie bereits erzeugt wurde, und vice versa;
- Bestimmen einer Steuerungsinformation für den Fall, dass die Regulierungsinformation indikativ für eine Über- oder Unterproduktion ist, wobei die Steuerungsinformation indikativ für eine Steuerung und/oder Regelung der Menge an von den einen oder mehreren Stromerzeugungsanlagen erzeugter elektrischer Energie ist, wobei das Bestimmen der Steuerungsinformation zumindest teilweise basierend auf der erfassten Regulierungsinformation und auf der erfassten Erzeugungsinformation erfolgt, wobei basierend auf dem bestimmten Zeitpunkt, zu welchem die Regulierungsinformation erfasst ist, die verbleibende Zeit des vorbestimmten Intervalls bestimmt wird, wobei ein oder mehrere Betriebspunkte für die einen oder mehreren Stromerzeugungsanlagen derart bestimmt werden, dass für die verbleibende Zeit des vorbestimmten Intervalls die von den einen oder mehreren Stromerzeugungsanlagen erzeugte Menge an elektrischer Energie für das vorbestimmte Intervall zumindest einer bestimmten Differenz zwischen der Menge an erzeugter elektrischer Energie gemäß der Prognoseinformation und gemäß der Erzeugungsinformation einspart oder mehr erzeugt, und wobei dieser bestimmte eine oder die bestimmten mehreren Betriebspunkte von der Steuerungsinformation umfasst sind; und
- Ausgeben oder Veranlassen des Ausgebens der bestimmten Steuerungsinformation, wobei basierend auf der bestimmten Steuerungsinformation eine Steuerung und/oder Regelung der eine oder mehreren Stromerzeugungsanlagen durchführbar ist.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen und/oder zu steuern.

Gemäß dem zweiten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem zweiten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Einzelne Verfahrensschritte des Verfahrens gemäß dem ersten Aspekt (beispielsweise das Erfassen einer Erzeugungsinformation) können hierbei mit einer Sensorvorrichtung, welche auch mindestens ein Sensorelement aufweist, durchgeführt werden. Ebenso können einzelne Verfahrensschritte (beispielsweise Bestimmen einer Steuerungsinformation), welche beispielswiese nicht unbedingt mit der Sensoreinrichtung durchgeführt werden müssen, von einer weiteren Vorrichtung vorgenommen werden, welche insbesondere über ein Kommunikationssystem mit der Vorrichtung, welche mindestens ein Sensorelement aufweist, in Verbindung steht.

Weitere Vorrichtungen können vorgesehen sein, beispielswiese ein Server und/oder beispielsweise ein Teil bzw. eine Komponente einer sogenannten Computer Cloud, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem zweiten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem zweiten Aspekt der Erfindung wird auch ein computerlesbares Speichermedium beschrieben, welches ein Computerprogramm gemäß dem zweiten Aspekt enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einem dritten Aspekt der Erfindung wird auch ein System beschrieben, umfassend mehrere Vorrichtungen, welche zusammen ein Verfahren gemäß dem ersten Aspekt durchführen.

Ein beispielhaftes System gemäß dem dritten Aspekt umfasst beispielhaft eine oder mehrere Stromerzeugungsanlagen, welche dazu ausgebildet und/oder eingerichtet sind, basierend auf einer von den einen oder mehreren Vorrichtungen bestimmten und ausgegebenen Steuerungsinformation einen oder mehrere Betriebspunkte einzustellen.

Im Folgenden werden beispielhafte Merkmale und beispielhafte Ausführungsformen nach allen Aspekten des Gegenstandes detaillierter erläutert:
Die Prognoseinformation wird erfasst (z. B. empfangen), z. B. von einer Vorrichtung (z. B. ein Server), der mit der einen oder den mehreren Vorrichtungen, die das gegenständliche Verfahren durchführen, elektrisch verbunden ist. Diese elektrische Verbindung kann beispielsweise über ein Kommunikationsnetz (z. B. das Internet) realisiert sein. Die Prognoseinformation wird beispielsweise an die einen oder den mehreren Vorrichtungen, die das gegenständliche Verfahren durchführen, übermittelt.

Die Prognoseinformation ist indikativ für eine Menge an von den einen oder mehreren Stromerzeugungsanlagen erzeugter elektrischer Energie, die innerhalb eines vorbestimmten Intervalls erzeugt wird. Das vorbestimmte Intervall hat beispielsweise eine definierte Länge, z. B. 15 Minuten. Das vorbestimmte Intervall wird gegenständlich auch mit PTU (Program Time Unit) bezeichnet.

Die Prognoseinformation wird beispielsweise von einem Teilnehmer des Stromnetzes (z. B. Stromerzeuger) an einem Tag, der vor demjenigen Tag an dem das vorbestimmte Intervall liegt, von dem Teilnehmer prognostiziert.

Die Erzeugungsinformation repräsentiert beispielsweise eine produzierte Menge an elektrischer Energie, die von den einen oder mehreren Stromerzeugungsanlagen innerhalb des vorbestimmten Intervalls (z. B. bis zum Erfassungszeitpunkt der Erzeugungsinformation) erzeugt wurde.

Die Erzeugungsinformation repräsentiert beispielsweise eine prädizierte Information über eine Menge an von den einen oder mehreren Stromerzeugungsanlagen erzeugter elektrischer Energie, die unmittelbar vor dem Beginn der Erzeugung der elektrischen Energie durch die einen oder mehreren Stromerzeugungsanlagen bestimmt wird. Beispielweise wird die Menge an erzeugter elektrischer Energie von den einen oder mehreren Stromerzeugungsanlagen für ein vorbestimmtes Intervall, das sich z. B. über einen Zeitraum von 07:00 - 07:15 eines bestimmten Tages erstreckt, um 07:00 oder um 6:59 des bestimmten Tages prädiziert. Entsprechend ist die Erzeugungsinformation unmittelbar (für das nächste anstehende Intervall) prädiziert. Die Menge an erzeugter elektrische Energie gemäß der Erzeugungsinformation kann beispielsweise für einen Zeitraum von einer Stunde, z. B. von 07:00 - 08:00 eines bestimmten Tages prädiziert sein, wobei entsprechend eine Aufteilung der Erzeugungsinformation in vorbestimmte Intervalle, z. B. mit einer vorbestimmten Zeitdauer für das vorbestimmte Intervall erfolgen kann. Die vorbestimmte Zeitdauer kann z. B. eine vorbestimmte Zeitdauer von 15 Minuten für einen z. B. niederländischen Energiemarkt sein. Es versteht sich, dass die Aufteilung der Erzeugungsinformation in vorbestimmte Intervalle für jede gegebene Zeitdauer innerhalb des Zeitraums (z. B. von einer Stunde) möglich ist. Die Erzeugungsinformation kann beispielsweise zumindest teilweise basierend auf Wetter-Prognosedaten oder dergleichen prädiziert sein, so dass die Menge an elektrischer Energie, die voraussichtlich unmittelbar in dem (anstehenden) vorbestimmten Intervall erzeugt wird, sehr genau prädiziert werden kann.

Die erfasste Regulierungsinformation ist indikativ für eine Über- oder Unterproduktion von von den einen oder mehreren Stromerzeugungsanlagen erzeugter elektrische Energie innerhalb des vorbestimmten Intervalls. Die Regulierungsinformation ist indikativ für eine Überproduktion für das bestimmte Intervall für den Fall, dass das bestimmte Intervall noch nicht abgelaufen ist und die gemäß der Prognoseinformation zu erzeugende Menge an elektrischer Energie für das vorbestimmte Intervall bereits erzeugt wurde, und vice versa. Die Regulierungsinformation ist beispielsweise ferner indikativ für eine Vergütung oder für Sanktionierungskosten für eine Erzeugungsmenge (z. B. in der Einheit MWh) an elektrischer Energie, die von den einen oder mehreren Stromerzeugungsanlagen zu viel oder zu wenig während des vorbestimmten Intervalls in das Stromnetz eingespeist wird.

Beispielsweise für diesen Fall wird die Steuerungsinformation bestimmt, wobei beispielsweise die Menge an erzeugter Energie durch die einen oder mehreren Stromerzeugungsanlagen für die restliche Zeitdauer des vorbestimmten Intervalls zur Verringerung der Menge an erzeugter elektrischer Energie, die über die Menge an elektrischer Energie gemäß der Prognoseinformation liegt, zu verringern. Ebenfalls kann für den umgekehrten Fall, dass die einen oder mehreren Stromerzeugungsanlagen für die restliche Zeitdauer des vorbestimmten Intervalls bisher noch nicht die Menge an elektrischer Energie gemäß der Prognoseinformation erzeugt haben, beispielsweise bedingt dadurch, dass die einen oder mehreren Stromerzeugungsanlagen nicht mit maximal möglicher Erzeugungskapazität Strom erzeugen, entsprechend um die Menge an erzeugter elektrischer Energie für diese restliche Zeitdauer des vorbestimmten Intervalls gesteigert werden.

Die bestimmte Steuerungsinformation kann beispielsweise ausgegeben werden bzw. deren Ausgabe kann veranlasst werden. Beispielsweise wird die Steuerungsinformation an eine Einrichtung übermittelt, welche die einen oder mehreren Stromerzeugungsanlagen steuern und/oder regeln kann, oder diese Einrichtung kann die bestimmte Steuerungsinformation beispielsweise an eine entsprechende Einrichtung, die ausgebildet und/oder eingerichtet ist, eine Steuerung und/oder Regelung der einen oder mehreren Stromerzeugungsanlagen durchzuführen weiterleiten.

Derart kann eine Über- oder Unterproduktion an Strom durch die einen oder mehreren Stromerzeugungsanlagen, die über oder unter der Menge an elektrische Energie gemäß der Prognoseinformation liegt zumindest minimiert werden, um beispielsweise anfallende Sanktiönierungskosten des Ausgleichsenergiemarktes zumindest zu minimieren.

Die einen oder mehreren Betriebspunkte für die einen oder mehreren Stromerzeugungsanlagen repräsentieren beispielsweise einen prozentualen Wert der möglichen Erzeugungsleistung der einen oder mehreren Stromerzeugungsanlagen, z. B. in einem Intervall von 0% bis 100%. Basierend auf einer bestimmten Erzeugungsmenge an elektrische Energie, die gegenüber der von der Prognoseinformation beispielsweise repräsentierten Menge an elektrischer Energie voraussichtlich zu viel oder zu wenig erzeugt (produziert) wird, und der Kenntnis der maximal möglichen Erzeugungsleistung der einen oder mehreren Stromerzeugungsanlagen, kann beispielsweise der Betriebspunkt auf z. B. 20% bestimmt werden, so dass die Erzeugungsmenge an elektrischer Energie durch eine Erzeugung mit 20% der maximal möglichen Erzeugungsmenge an elektrischer Energie der einen oder mehreren Stromerzeugungsanlagen durchgeführt wird.

Ein Betriebspunkt oder mehrere Betriebspunkte werden beispielsweise in Abhängigkeit der Anzahl von Anlagen, die von den einen oder mehreren Stromerzeugungsanlagen umfasst sind, bestimmt. Beispielsweise ist jeweils ein Betriebspunkt der einen oder mehreren Betriebspunkte einer der einen oder mehreren Stromerzeugungsanlagen zugeordnet. Eine Stromerzeugungsanlage kann dabei auf einen dieser einen oder mehreren Betriebspunkt gesteuert und/oder geregelt (auch mit "gefahren" bezeichnet) werden und dann gemäß diesem Betriebspunkt elektrische Energie erzeugen.

Es versteht sich, dass das gegenständliche Verfahren nach allen Aspekten in Echtzeit (real-time) durchgeführt werden kann. Das gegenständliche Verfahren nach allen Aspekten kann also wiederholt durchgeführt werden, wobei jeweils nach dem Bestimmen der Steuerungsinformation eine Steuerung und/oder Regelung der einen oder mehreren Stromerzeugungsanlagen erfolgen kann. Insbesondere kann das gegenständliche Verfahren nach allen Aspekten beispielsweise stetig oder erneut nach einem Ablauf einer vorbestimmten Zeitspanne (z. B. einmal pro Sekunde, 5 mal pro Sekunde, um einige nicht-limitierende Beispiele zu nennen) durchgeführt werden.

In einer beispielhafte Ausgestaltung nach allen Aspekten des Gegenstandes umfasst das Verfahren ferner:
- Erfassen einer Verfügbarkeitsinformation indikativ für eine Verfügbarkeit der einen oder mehreren Stromerzeugungsanlagen,
wobei die Steuerungsinformation ferner basierend auf der erfassten Verfügbarkeitsinformation bestimmt wird.

Die Verfügbarkeitsinformation repräsentiert beispielsweise eine geplante und/oder eine ungeplante Verfügbarkeit der einen oder mehreren Stromerzeugungsanlagen. Bei der geplanten Verfügbarkeit der einen oder mehreren Stromerzeugungsanlagen kann es sich beispielsweise um eine Wartung der einen oder mehreren Stromerzeugungsanlagen handeln. Diese ist in der Regel bekannt und beispielsweise in einem Speicher (z.B. Datenbank) als entsprechende Information hinterlegt. Eine geplante Wartung der einen oder mehreren Stromerzeugungsanlagen reduziert beispielsweise (linear) die verfügbare Erzeugungsleistung der einen oder mehreren Stromerzeugungsanlagen.

Bei der ungeplanten Verfügbarkeit der einen oder mehreren Stromerzeugungsanlagen kann es sich beispielsweise um einen Defekt oder dergleichen, der ungeplant an der einen oder den mehreren Stromerzeugungsanlagen auftritt handeln.

Das Erfassen der Verfügbarkeitsinformation kann beispielsweise wiederholt (z. B. in einem Abstand von vorbestimmten Zeitintervallen, z. B. sekündlich) erfolgen, und somit unmittelbar die Verfügbarkeit der einen oder mehreren Stromerzeugungsanlagen bei dem Bestimmen der Steuerungsinformation für eine Steuerung und/oder Regelung der einen oder mehreren Stromerzeugungsanlagen berücksichtigen.

In einer beispielhaften Ausgestaltung nach allen Aspekten des Gegenstandes erfolgt das Erfassen der Regulierungsinformation mit einer zeitlichen Verzögerung gegenüber dem Erfassen der Erzeugungsinformation, und die verbleibende Zeit des vorbestimmten Intervalls erfolgt ferner basierend auf der zeitlichen Verzögerung.

Die zeitliche Verzögerung beträgt beispielsweise 1 bis 3 Minuten, insbesondere 2 Minuten. Es ist nicht auszuschließen, dass in beispielhaften Ausgestaltungen des Gegenstands die Verzögerung abweichend von den vorstehend angeführten Werten beispielsweise 0,5 bis 1,5, sowie 1 Minuten oder 2,5 bis 5 Minuten, sowie 3 bis 4 Minuten beträgt. Ferner kann in beispielhaften Ausgestaltungen keine zeitliche Verzögerung auftreten bzw. die zeitliche Verzögerung beispielsweise 0 Minuten betragen. Dies entspricht einem Ausführen bzw. Durchführen des gegenständlichen Verfahrens nach allen Aspekten in Echtzeit (real-time).

Die Regulierungsinformation wird von einem Übertragungsnetzbetreiber mit einer vorbestimmten Verzögerung bereitgestellt. Um die Zeit zur Steuerung und/oder Regelung der einen oder mehreren Stromerzeugungsanlagen zu maximieren, kann eine Abfrage zum Erfassten der Regulierungsinformation beispielsweise in vorbestimmten Intervallen, vorzugsweise mit einer Dauer von etwa 0,1 Sekunden bis 2 Sekunden, 0,2 bis 1,5 Sekunden, 0,3 bis 1 Sekunde, 0,4 bis 0,9 Sekunden, 0,5 bis 0,8 Sekunden, sowie 0,6 bis 0,7 Sekunden erfolgen. Derart kann die Regulierungsinformation direkt nach deren Bereitstellung durch den Übertragungsnetzbetreiber erfasst werden.

Die Regulierungsinformation repräsentiert beispielsweise die Kosten oder Vergütungen von einer oder mehreren Stromerzeugungsanlagen erzeugter elektrischer Energie unter Berücksichtigung der zeitlichen Verzögerung. Beispielsweise beträgt die zeitliche Verzögerung bis die Regulierungsinformation erfassbar ist, etwa zwei Minuten, wie vorstehend bereits ausgeführt wurde. Entsprechend kann nach dem Ablauf der zeitlichen Verzögerung erfasst werden, dass beispielsweise in den vergangenen zwei Minuten bereits eine Über- oder Unterproduktion an elektrischer Energie durch die einen oder mehreren Stromerzeugungsanlagen stattgefunden hat. Dies kann mitunter bereits Kosten für den Stromerzeuger verursacht haben, z. B. durch eine entsprechende Sanktionierung. Das Erfassen einer Über- oder Unterproduktion umfasst implizit die Erkenntnis, dass beispielsweise die am Vortag oder untertägig (auch als Intraday bezeichnet) für das vorbestimmte Intervall bestimmte Erzeugungsmenge an elektrischer Energie für das Stromnetz bereits überschritten oder unterschritten wurde. Dies bedeutet für den Fall einer Überproduktion der Menge an elektrischer Energie, dass für die gesamte Restdauer des vorbestimmten Intervalls, also bis zu dessen Ablauf, Sanktionierungskosten für den Stromerzeuger durch die Erzeugung von weiterem Strom anfallen werden.

Eine beispielhafte Ausgestaltung nach allen Aspekten sieht vor, dass die Prognoseinformation zumindest eine Longterm-Prognoseinformation und zumindest eine Day-Ahead-Prognoseinformation umfassend, die zusammen summiert die Menge an von den einen oder mehreren Stromerzeugungsanlagen erzeugter elektrischer Energie, die innerhalb des vorbestimmten Intervalls erzeugt wird, umfasst.

Die Prognoseinformation umfasst beispielsweise eine sogenannte Longterm-Prognose. Ferner umfasst die Prognoseinformation beispielsweise eine sogenannte Day-Ahead-Prognose. Alternativ oder zusätzlich umfasst die Prognoseinformation eine Summe, die aus den Werten der Longterm-Prognose und der Day-Ahead-Prognose gebildet ist.

Die Longterm-Prognose ist beispielweise indikativ für eine bereits voraussichtlich abgefragte Menge an elektrischer Energie aus dem Stromnetz. Diese kann bereits lange (z. B. Wochen oder Monate) im Voraus, z. B. auf Basis von historischen Daten des Vorjahres oder dergleichen, bestimmt sein.

Die Day-Ahead-Prognose ist beispielsweise indikativ für eine Menge an elektrische Energie, die zusätzlich oder vermindert gegenüber derjenigen Menge an elektrischer Energie gemäß der Longterm-Prognose voraussichtlich in dem Stromnetz benötigt wird. Diese Day-Ahead-Prognose erfolgt in der Regel am Vortag vor dem tatsächlichen Abruf der Menge an elektrischer Energie aus dem Stromnetz.

Alternativ oder zusätzlich kann die Prognoseinformation ferner beispielsweise zumindest eine Intraday-Prognose umfassen. Die Intraday-Prognose ist beispielsweise in Echtzeit (real-time) verfügbar. Die Intraday-Prognose ist beispielsweise spätestens vor dem Beginn des vorbestimmten Intervalls (z. B. 15 Minuten Intervall) verfügbar.

Eine weitere beispielhafte Ausgestaltung nach allen Aspekten sieht vor, dass das Bestimmen der Steuerungsinformation diejenige Zeit berücksichtigt, die benötigt wird, um die einen oder mehreren Stromerzeugungsanlagen auf die bestimmten einen oder mehreren Betriebspunkte der einen oder mehreren Stromerzeugungsanlagen zu steuern und/oder zu regeln.

Entsprechend kann die verminderte oder vergrößerte Erzeugungsmenge an elektrischer Energie der einen oder mehreren Stromerzeugungsanlagen, die noch während des Umstellens der einen oder mehreren Stromerzeugungsanlagen auch eine verminderte oder vergrößerte Erzeugungsmenge an elektrischer Energie generiert wird, berücksichtigt werden. Beispielsweise für den Fall, dass die einen oder mehreren Stromerzeugungsanlagen von 100% auf z. B. 20% runtergefahren werden, wird diejenige Menge an elektrischer Energie, die während des Runterfahrens auf z. B. 20% der maximal möglichen Erzeugungsmenge der einen oder mehreren Stromerzeugungsanlagen erzeugt wird, berücksichtigt.

In einer beispielhaften Ausgestaltung umfasst das Bestimmen der Steuerungsinformation ferner:
- Erfassen einer Restzeitinformation indikativ für eine Zeitdauer bis zu welchem Ablauf das Ausgeben oder das Veranlassen des Ausgebens der bestimmten Steuerungsinformation erfolgt sein muss, um die eine oder mehreren Stromerzeugungsanlage vor dem Ablauf des vorbestimmten Intervalls auf die maximal mögliche Erzeugungsmenge an elektrischer Energie der einen oder mehreren Stromerzeugungsanlagen zu steuern und/oder zu regeln,
wobei das Bestimmen der Steuerungsinformation ferner basierend auf der erfassten Restzeitinformation erfolgt.

Derart kann berücksichtigt werden, dass die einen oder mehreren Stromerzeugungsanlage auch rechtzeitig vor dem Ablauf des vorbestimmten Intervalls (z. B. 15 Minuten Periode) wieder auf die maximal mögliche Erzeugungsmenge (z. B. Erzeugungsleistung von 100%) an elektrischer Energie der einen oder mehreren Stromerzeugungsanlagen gesteuert und/oder geregelt ist.

Eine beispielhafte Ausgestaltung sieht vor, dass basierend auf dem einen oder den mehreren Betriebspunkten zur Steuerung und/oder Regelung der einen oder mehreren Stromerzeugungsanlagen einer oder mehrere Steuerungsparameter für die eine oder mehreren Stromerzeugungsanlagen bestimmt werden, welche die einen oder mehreren Stromerzeugungsanlage auf den einen oder die mehreren Betriebspunkte einstellen.

Unter dem Begriff "einstellen" -auch mit "fahren" bezeichnet - wird gegenständlich verstanden, dass z. B. eine Anfahrrampe und/oder eine Abfahrrampe der einen oder mehreren Stromerzeugungsanlagen durch die Steuerungsparameter realisiert wird. Beispielsweise kann eine Stromerzeugungsanlage der einen oder mehreren Stromerzeugungsanlagen nicht einfach angehalten werden, wobei z. B. der Betriebspunkt von 100% Erzeugungsleistung auf 0% Erzeugungsleistung der Stromerzeugungsanlage gesetzt wird. Einzelne Funktionsteile der Stromerzeugungsanlage müssen beispielsweise gesteuert werden (z. B. eine Flügelstellung der Rotorblätter einer Windenergieanlage), so dass ein Strom erzeugender Generator (z. B. eine Turbine der Windenergieanlage) entsprechend auf den Betriebspunkt eingestellt ist. Für ein Bestimmen der Steuerungsparameter kann beispielsweise basierend auf den einen oder mehreren Betriebspunkte von den einen oder mehreren Stromerzeugungsanlagen eine Anfrage an einen Speicher, z. B. eine Datenbank, erfolgen, in welcher zu einem oder mehreren Betriebspunkten entsprechende Parameter zur Steuerung und/oder Regelung der einen oder mehreren Stromerzeugungsanlagen hinterlegt bzw. verknüpft sind, sind z. B. in einer von dem Speicher umfassten Matrix. Diese hinterlegten Steuerungsparameter können anschließend beispielsweise an die eine oder die mehreren Vorrichtungen, welche das gegenständliche Verfahren durchführen, übermittelt werden. Entsprechend können die Steuerungsparameter beispielsweise ausgegeben werden bzw. dessen Ausgabe kann veranlasst werden. Alternativ oder zusätzlich können diese Steuerungsparameter beispielsweise unmittelbar an die einen oder mehreren Stromerzeugungsanlagen ausgeben werden bzw. dessen Ausgabe kann veranlasst werden, z. B. über eine Einrichtung (z. B. Server), welche die Steuerungsparameter an die eine oder mehreren Stromerzeugungsanlagen übermittelt.

Eine beispielhafte Ausgestaltung nach allen Aspekten sieht vor, dass das Bestimmen der Steuerungsinformation ferner umfasst:
- Bestimmen einer Überschussinformation, wobei die Überschussinformation für den Fall, dass trotz maximal möglicher Erzeugungsmenge an elektrischer Energie der einen oder mehreren Stromerzeugungsanlagen die Menge an elektrischer Energie gemäß der Prognoseinformation nicht erzeugt wird, diejenigen Stromerzeugungsanlagen der einen oder mehreren Stromerzeugungsanlagen bestimmt, welche in der Menge an erzeugter elektrischer Energie reduziert werden, deren Sanktionierung die geringsten Kosten verursacht.

Beispielsweise können eine oder mehrere der einen oder mehreren Stromerzeugungsanlagen beispielsweise eine Priorisierung erfahren, z. B. durch den Übertragungsnetzbetreiber, da diese beispielsweise besonders kurzfristig steuer- und/oder regelbar sind und/oder einer monetären Förderung unterliegen. Beispielsweise können diese bestimmten Stromerzeugungsanlagen schnell zusätzlich benötigten Strom für das Stromnetz liefern. Durch die Bereitstellung dieser Funktion der bestimmten einen oder mehreren Stromerzeugungsanlagen und deren Nutzen für das Stromnetz über einen langen Betriebszeitraum des Stromnetzes, können diese beispielsweise von Sanktionen ausgenommen sein.

In einer beispielhaften Ausgestaltung nach allen Aspekten weisen die einen oder die mehreren Betriebspunkte eine untere Schranke auf, die die minimal mögliche Erzeugungsleistung der jeweiligen Stromerzeugungsanlage nach unten begrenzen.

Die minimal mögliche Erzeugungsleistung wird auch mit "minimum stable load", oder alternativ mit SEL (Stable Export Limit) der einen oder mehreren Stromerzeugungsanlagen bezeichnet. Wird diese unter Schranke der jeweiligen einen oder mehreren Stromerzeugungsanlagen unterschritten, könnte es passieren, dass die eine oder mehreren Stromerzeugungsanlagen länger vom Stromnetz genommen (z. B. getrennt) werden müssen, weil diese nicht ohne weiteres wieder auf einen Erzeugungsbetrieb hochgefahren werden können. Mitunter könnte es mehrere Stunden dauern, um ein Einspeisen von von den einen oder mehreren Stromerzeugungsanlage erzeugter elektrischer Energie in das Stromnetz (wieder) zu ermöglichen. Die untere Schranke stellt entsprechend sicher, dass vorgenannter Fall vermieden wird. Die untere Schranke liegt beispielsweise bei 5% der maximal möglichen Erzeugungsleistung der jeweiligen Stromerzeugungsanlage der einen oder mehreren Stromerzeugungsanlagen.

Eine beispielhafte Ausgestaltung nach allen Aspekten sieht vor, dass die einen oder mehreren Stromerzeugungsanlagen eine oder mehrere Strom erzeugende Vorrichtungen umfassen, wobei die bestimmte Steuerungsinformation in Abhängigkeit eines jeweiligen Betriebspunktes der jeweiligen Strom erzeugenden Vorrichtungen den jeweiligen Betriebspunkt für die jeweiligen Strom erzeugende Vorrichtung festlegt, wobei der zumindest einen Betriebspunkt für die jeweiligen Strom erzeugenden Vorrichtung derart festgelegt ist, dass die einen oder mehreren Stromerzeugungsanlagen kumuliert die gemäß der Steuerungsinformation bestimmte Differenz zwischen der Menge an erzeugter elektrischer Energie gemäß der Prognoseinformation und gemäß der Erzeugungsinformation einsparen oder mehr erzeugen.

Innerhalb einer Stromerzeugungsanlage, die wiederrum zumindest zwei Strom erzeugende Vorrichtungen umfasst, ist beispielsweise eine Verhältnis abhängige Steuerung und/oder Regelung der einzelnen Strom erzeugenden Vorrichtungen möglich. Beispielweise kann in Abhängigkeit der momentanen Erzeugungsleistung der jeweiligen Strom erzeugenden Vorrichtung der einen oder mehreren Stromerzeugungsanlagen eine Gesamt-Erzeugungsleistung und darauf basierend die Erzeugungsmenge an elektrischer Energie der einen oder mehreren Stromerzeugungsanlagen bestimmt werden. Zur Realisierung einer Erzeugungsmenge an elektrischer Energie der einen oder mehreren Stromerzeugungsanlagen kann beispielsweise eine Strom erzeugende Vorrichtung der Stromerzeugungsanlage einen Betriebspunkt von 80% der maximal möglichen Erzeugungsleistung dieser Strom erzeugenden Vorrichtung, und eine andere Strom erzeugende Vorrichtung der Stromerzeugungsanlage einen Betriebspunkt von 20% der maximal möglichen Erzeugungsleistung dieser Strom erzeugenden Vorrichtung. Insgesamt erzeugt die Stromerzeugungsanlage in diesem Beispielsfall 50% der maximal möglichen Erzeugungsleistung der Stromerzeugungsanlage. Entsprechend kann die Steuerung und/oder Regelung der einen oder mehreren Stromerzeugungsanlagen gemäß der bestimmten Steuerungsinformation erfolgen.

Ferner können beispielweise mehrere Stromerzeugungsanlage nach vorstehender Ausführung gesteuert und/oder geregelt werden, so dass beispielwiese mehrere Stromerzeugungsanlage eine bestimmte Erzeugungsleistung der maximal möglichen Erzeugungsleistung der mit dem Stromnetz verbundenen Stromerzeugungsanlagen in das Stromnetz einspeisen, wobei die jeweiligen Stromerzeugungsanlagen und eine od er mehrere von diesen umfassten Strom erzeugenden Vorrichtungen jeweils voneinander abweichende Betriebspunkte aufweisen können.

Das Ausgeben der jeweiligen Betriebspunkte an die Stromerzeugungsanlagen kann beispielsweise simultan oder einzeln erfolgen, so dass entsprechend eine simultane oder einzelne Steuerung und/oder Regelung der jeweiligen Stromerzeugungsanlage und/oder von diesen umfasste Strom erzeugenden Vorrichtungen durchführbar ist. In einer weiteren beispielhaften Ausgestaltung nach allen Aspekten ist die Steuerungsinformation ferner unter Berücksichtigung, dass die einen oder mehreren Betriebspunkte der einen oder mehreren Stromerzeugungsanlagen vor dem Ablauf des vorbestimmten Intervalls wieder auf die jeweils maximal mögliche Erzeugungsleistung an elektrischer Energie gesteuert und/oder geregelt ist, bestimmt. Um möglichst gemäß der Prognoseinformation, die für das nächste anstehende und vorbestimmte Intervall bereits bestimmt ist, und in diesem anstehenden und vorbestimmten Intervall möglichst genau die gemäß der Prognoseinformation bestimmte Menge an elektrischer Energie erzeugen zu können, werden die einen oder mehreren Stromerzeugungsanlagen zum Ende des vorbestimmten Intervalls jeweils wieder auf die maximal mögliche Erzeugungsleistung mittels der einen oder mehreren Betriebspunkte für die einen oder mehreren Stromerzeugungsanlagen eingestellt. Derart kann sichergestellt werden, dass ein jeweiliges vorbestimmtes Intervall stets mit maximal möglicher Erzeugungsleistung und damit verbunden maximaler Erzeugungsmenge an elektrischer Energie der einen oder mehreren Stromerzeugungsanlagen begonnen wird.

Wenn z. B. nach 13 min eines 15 Minuten dauernden vorbestimmten Intervalls, also im letzten Drittel des vorbestimmten Zeitintervall, nach Basis einer bestimmten Steuerungsinformation eine Steuerung und/oder Regelung der einen oder mehreren Stromerzeugungsanlagen erfolgen müsste, wird in einer weiteren beispielhaften und gegenständlichen Ausgestaltung diese nicht befolgt, da auf eine Reduzierung der Erzeugungsleistung der einen oder mehreren Stromerzeugungsanlagen der einen oder mehreren Stromerzeugungsanlagen unmittelbar diese wieder (bedingt durch den Ablauf des vorbestimmten Intervalls) auf die maximal mögliche Erzeugungsleistung der einen oder mehreren Stromerzeugungsanlage gesteuert und/oder geregelt werden. Insbesondere um den Verschleiß von Funktionsteilen (z. B. einer Turbine einer Windenergieanlage) zu reduzieren, wird in diesem, wonach aufgrund der Dauer für das Einstellen eines oder mehrerer reduzierter Betriebspunkte für die eine oder mehreren Stromerzeugungsanlagen und dem anschließenden Einstellen der einen oder mehreren Betriebspunkte auf die maximal mögliche Erzeugungsleistung, der entsprechend bestimmte Steuerungsparameter nicht ausgegeben. Somit erfolgt in diesem Fall beispielsweise keine Steuerung und/oder Regelung der einen oder mehreren Stromerzeugungsanlagen, da z. B. voraussehbar ist, dass auf eine gemäß der einen oder mehreren Betriebspunkte folgenden Abfahrrampe von den einen oder mehreren Stromerzeugungsanlagen eine direkte Anfahrrampe erfolgen müsste.

Eine weitere beispielhafte Ausgestaltung nach allen Aspekten ist dadurch gekennzeichnet, dass die einen oder mehreren Betriebspunkte der einen oder mehreren Stromerzeugungsanlagen auf die maximal mögliche Erzeugungsleistung an elektrischer Energie automatisch von den einen oder mehreren Stromerzeugungsanlagen zu einem Zeitpunkt, der vor dem Ablauf des vorbestimmten Intervalls liegt und derart bestimmt ist, dass mit dem Ablauf des vorbestimmten Intervalls der eine oder die mehreren Betriebspunkte der einen oder mehreren Stromerzeugungsanlage wieder auf die maximal mögliche Erzeugungsmenge an elektrischer Energie gesteuert und/oder geregelt ist bzw. getriggert wird.

Die einen oder mehreren Betriebspunkte der einen oder mehreren Stromerzeugungsanlagen werden automatisch (z. B. von den einen oder meheren Stromerzeugungsanlagen selbstständig, d.h. beispielsweise durch eine Steuerungseinheit, die in einer jeweiligen Stromerzeugungsanlage integriert ist oder direkt mit dieser verbunden ist) gesteuert und/oder geregelt. Um die Versorgungssicherheit durch das Stromnetz durch einen oder mehrere Betriebspunkte der einen oder mehreren Stromerzeugungsanlagen, z. B. im Fehlerfall der Datenleitung zur Übermittlung der Steuerungsparameter zum Einstellen der einen oder mehreren Betriebspunkte) nicht zu gefährden, kann dies entsprechend für jedes vorbestimmte Intervalls derart gesteuert und/oder geregelt sein, so dass jeweils zu Beginn eines vorbestimmten Intervalls die maximal mögliche Erzeugungsleistung der einen oder mehreren Stromerzeugungsanlage bereitgestellt werden kann.

Dies kann beispielsweise anhand eines automatischen Resets erfolgen, so dass eine maximal mögliche Erzeugung vor Ablauf des vorbestimmten Intervalls wieder gewährleistet ist. Dauert das Hochfahren einer Stromerzeugungsanlage bei einem Betriebspunkt des "minimal stable loads" beispielsweise eine bestimmte Zeitdauer, kann entsprechend der Rest um diese bestimmte Zeitdauer vor Ablauf des vorbestimmten Intervalls getriggert werden. Beispielweise kann dies bei einer Windenergieanlage etwa 30s vor dem Ablauf des vorbestimmten Intervalls erfolgen.

Zusätzlich oder alternativ, ist ein derartiger Reset variabel triggerbar, beispielweise für den Fall, dass eine Stromerzeugungsanlage beispielsweise oberhalb des "minimal stable loads" betrieben wird, dauert das Hochfahren dieser Stromerzeugungsanlage weniger, als wenn die Stromerzeugungsanlage vom "minimal stable load" aus auf die maximal mögliche Erzeugungsleistung der Stromerzeugungsanlage hochgefahren werden müsste.

Ein derartiger Reset kann beispielsweise mittels eines Steuersignals zum Hochfahren der einen oder mehreren Stromerzeugungsanlage getriggert werden, wobei das Steuersignal - wie bereits ausgeführt - von der jeweiligen Stromerzeugungsanlage selber generiert wird. Der Vorteil hiervon ist, dass eine Unabhängigkeit von einem mitunter verwendeten Kommunikationsnetz erreicht wird.

In einer beispielhaften Ausgestaltung nach allen Aspekten sind die einen oder mehreren Stromerzeugungsanlagen Photovoltaikanlagen, Windenergieanlagen, Hydro- bzw. Wasserkraftanlagen (z. B. Laufwasserkraft-, Reservoirspeicherkraft-, und/oder Pumpspeicherkraftwerke, um nur einige nicht-limitierende Beispiele zu nennen) oder eine Kombination hiervon.

Es versteht sich, dass die jeweiligen Stromerzeugungsanlagen, beispielsweise die jeweiligen Windenergieanlagen als Strom erzeugende Vorrichtungen z. B. ein oder mehreren Windräder umfassen können. Gleiches gilt für eine oder mehrere Photovoltaikanlagen oder dergleichen, um einige nicht-limitierende Beispiele zu nennen. Bei den Windenenergieanlagen kann es sich beispielsweise sowohl um Onals auch um Off-Shore-Windenergieanlagen handeln.

Die jeweiligen Stromerzeugungsanlagen können an verschiedenen (geographischen) Orten angeordnet sein. Beispielsweise können die jeweiligen Stromerzeugungsanlagen der mehreren Stromerzeugungsanlagen in verschiedenen Ländern angeordnet sein. Entsprechend kann beispielsweise gemäß der bestimmten Steuerungsinformation eine Steuerung und/oder Regelung von mehreren Stromerzeugungsanlagen erfolgen, die in unterschiedlichen Ländern (z. B. in Deutschland, den Niederlanden, und Frankreich) angeordnet sind. Beispielsweise kann ferner mittels der bestimmten Steuerungsinformation eine Steuerung und/oder Regelung von mehreren Stromerzeugungsanlagen erfolgen, die in unterschiedlichen Ländern angeordnet sind, und die ferner jeweils von unterschiedlichem Typ sind, z. B. eine (oder mehrere) als Windenergieanlage(n) ausgebildete(n) Stromerzeugungsanlage(n) in Deutschland, eine (oder mehrere) als Windenergieanlage(n) ausgebildete(n) Stromerzeugungsanlage(n) in den Niederlanden, und eine (oder mehrere) als Wasserkraftanlage(n) ausgebildete(n) Stromerzeugungsanlage(n) in Frankreich, um ein nicht-limitierendes Beispiel zu nennen.

In einer weiteren beispielhaften Ausgestaltung nach allen Aspekten umfasst das Bestimmen der Steuerungsinformation ferner:
- Bestimmen einer Vorhersageinformation indikativ für eine prädizierte Regulierungsinformation für einen Zeitraum, der kürzer ist als die verbleibende Zeitdauer des vorbestimmten Intervalls, wobei die Vorhersageinformation basierend auf historischen Information [gleicher Tag, gleiche Woche des vorhergehenden Jahres, gestriger Tag, Mittelwerte über mehrere solcher historischer Information, oder eine Kombination hiervon] bestimmt wird,
wobei die Steuerungsinformation ferner basierend auf der bestimmten Vorhersageinformation bestimmt wird.

Der Zeitraum, der kürzer ist als die verbleibende Zeitdauer des vorbestimmten Intervalls kann beispielweise die nächsten 2 bis 5 min eines 15 minütigen Intervalls betreffen, um ein nicht-limitierendes Beispiel zu nennen.

Die bestimmte Vorhersageinformation realisiert beispielsweise ein Forecast-Modell, welches z. B. stetig für einen anstehenden Zeitraum innerhalb des vorbestimmten Intervalls die Regulierungsinformation prädiziert. Insbesondere kann beispielsweise anhand der Vorhersageinformation für denjenigen Zeitraum die Regulierungsinformation prädiziert werden, der identisch ist mit der Verzögerung, mit der die Regulierungsinformation (von dem Übertragungsnetzbetreiber) veröffentlicht wird.

Die gegenständliche Aufgabe wird ferner durch ein System gelöst, das System, umfassend eine oder mehrere Vorrichtungen, welche zusammen dazu ausgebildet und/oder eingerichtet sind, ein gegenständliches Verfahren auszuführen.

Eine beispielhafte gegenständliche Ausgestaltung ist dadurch gekennzeichnet, dass das System ferner eine oder mehrere Stromerzeugungsanlagen umfasst, welche dazu ausgebildet und/oder eingerichtet sind, basierend auf einer von den einen oder mehreren Vorrichtungen bestimmten und ausgegebenen Steuerungsinformation einen oder mehrere Betriebspunkte einzustellen.

Die zuvor in dieser Beschreibung beschriebenen beispielhaften Ausgestaltungen sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen sind der folgenden detaillierten Beschreibung einiger beispielhafter Ausführungsformen, insbesondere in Verbindung mit den Figuren, zu entnehmen. Die Figuren sollen jedoch nur dem Zwecke der Verdeutlichung, nicht aber zur Bestimmung des Schutzbereiches dienen. Die Figuren sind nicht maßstabsgetreu und sollen lediglich das allgemeine Konzept beispielhaft widerspiegeln. Insbesondere sollen Merkmale, die in den Figuren enthalten sind, keineswegs als notwendiger Bestandteil erachtet werden.

### Kurze Beschreibung der Figuren

In der Zeichnung zeigt
- Fig. 1: ein beispielhaftes System gemäß einem Ausführungsbeispiel;
- Fig. 2: ein Flussdiagramm eines beispielhaften Verfahrens nach einem Ausführungsbeispiel;
- Fig. 3a-d: jeweils eine beispielhafte Tabelle mit Informationen, welche in einem beispielhaften Verfahren nach einem Ausführungsbeispiel Anwendung finden;
- Fig. 4: ein schematisches Diagramm, welches eine Menge an elektrischer Energie in Abhängigkeit von einem oder mehreren Betriebspunkten von einen oder mehreren Stromerzeugungsanlagen abbildet, wie es in einem beispielhaften Verfahren nach einem Ausführungsbeispiel Anwendung findet; und
- Fig. 5: eine schematische Darstellung einer beispielhaften Ausführungsform einer Vorrichtung, die beispielsweise ein gegenständliches Verfahren nach allen Aspekten ausführen und/oder durchführen kann.

### Detaillierte Beschreibung einiger beispielhafter Ausführungsformen der Erfindung

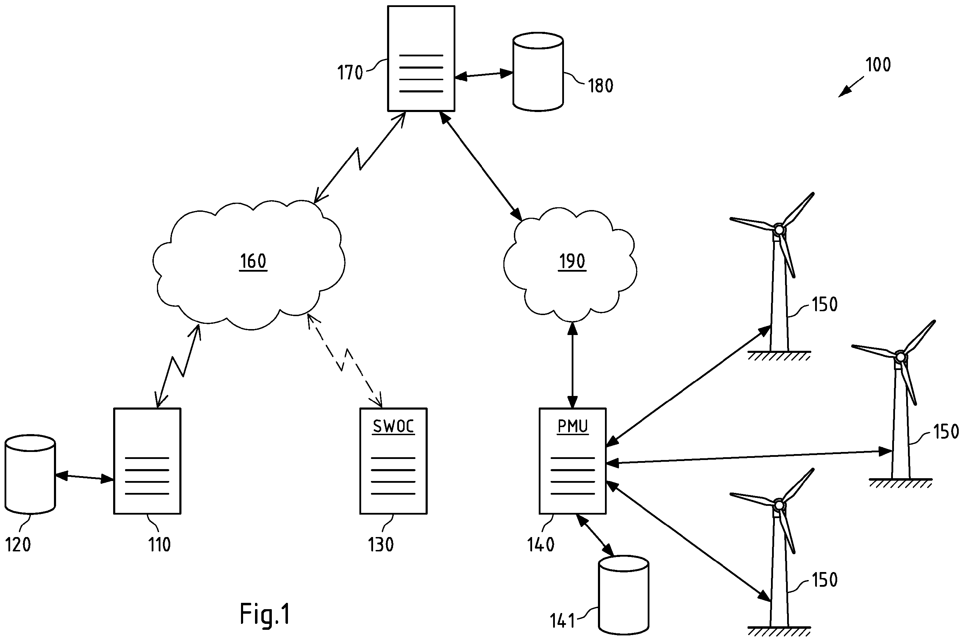

Fig. 1 zeigt ein beispielhaftes System gemäß einem gegenständlichen Ausführungsbeispiel.

Das System 100 umfasst eine Vorrichtung 110 (z. B. einen Server), die beispielsweise das gegenständliche Verfahren nach allen Aspekten ausführen und/oder durchführen kann. Die Vorrichtung 110 ist beispielweise mit einem Speicher 120 verbunden, der z. B. eine Datenbank umfasst. In dem Speicher 120 können insbesondere Informationen zur Verarbeitung zwischengespeichert, und/oder erfasste Informationen gespeichert und darauf zugegriffen werden.

Das System 100 umfasst ferner einen weiteren Server 130, ein sogenannter SWOC (Smart Wind Operation Controller) und ferner einen Server 140, eine sogenannte PMU (Power Management Unit). Die PMU 140 ist mit mehreren Stromerzeugungsanlagen 150, vorliegend Windenergieanlagen, verbunden, deren Steuerung und/oder Regelung beispielsweise über eine oder mehrere Steuerungsparameter ausgehend von der PMU 140 möglich ist. Mittels der Steuerungsparameter sind eine oder mehrere Betriebspunkte der Stromerzeugungsanlage 150 steuerbar und/oder regelbar. Die Steuerungsparameter können beispielsweise in dem Speicher 120 hinterlegt und mit einem oder mehreren Betriebspunkten für die Stromerzeugungsanlage 150, z. B. mittels einer Matrix, verknüpft bzw. verbunden sein.

Das System 100 umfasst ferner ein Übertragungsnetz (Stromnetz) 190, mittels welchem der von der Stromerzeugungsanlage 150 erzeugte elektrische Strom bzw. die erzeugte elektrische Energie zu einem oder mehreren Verbrauchern (in Fig. 1 nicht dargestellt) übertragen werden können. Die Verbindung der Stromerzeugungsanlage 150 zu dem Übertragungsnetz 190 ist vorliegend schematisch mittels des Doppelpfeils zwischen der PMU 140 und dem Übertragungsnetz 190 dargestellt.

Ein Server 170, optional mit einem weiteren Speicher 180 verbunden, der von dem Übertragungsnetzbetreiber betrieben wird, ist ebenfalls mit dem Übertragungsnetz 190 verbunden.

Das System 100 umfasst ferner ein Kommunikationsnetz 160 (z. B. das Internet), wobei über das Kommunikationsnetz 160 zwischen zumindest zwei Entitäten des Systems 100 Informationen austauschbar sind.

Eine Kommunikationsverbindung zwischen der Vorrichtung 110 und dem SWOC kann entweder direkt (schematisch mit dem Doppelpfeil, der die Vorrichtung 110 mit dem SWOC 130 verbindet, dargestellt) und/oder indirekt (z. B. als Redundanzverbindung) über das Kommunikationsnetz 160 erfolgen (schematisch dargestellt mittels der in das Kommunikationsnetz weisenden Doppelpfeile zwischen dem Kommunikationsnetz 160 und der Vorrichtung 110 bzw. dem SWOC 130.

Der Übertragungsnetzbetreiber hinterlegt beispielsweise eine von ihm bestimmte Regulierungsinformation in dem Speicher 180, und stellt diese mittels eines Zugriffs auf den Server 170 zur Verfügung. Entsprechend kann beispielsweise ein Erfassen dieser Regulierungsinformation seitens der Vorrichtung 110, z. B. über das Kommunikationsnetz 160 durchgeführt werden. Ferner kann in dem Speicher 180 eine Prognoseinformation zum Zugriff hinterlegt sein. Eine Erzeugungsinformation kann ferner ebenfalls in dem Speicher 180 hinterlegt sein. Alternativ kann die Erzeugungsinformation von einem weiteren Server (in Fig. 1 nicht dargestellt) eines Drittanbieters, z. B. über das Kommunikationsnetz bereitgestellt werden.

Eine bestimmte Steuerungsinformation kann beispielsweise von der Vorrichtung 110 über den SWOC 130 an die PMU 140 ausgegeben werden, wobei die PMU 140 beispielsweise auf Basis der empfangenen Steuerungsinformation eine Steuerung und/oder Regelung der Stromerzeugungsanlage 150 vornimmt. Hierzu können beispielsweise in einem mit der PMU 140 verbundenen Speicher 141 zu der bestimmten Steuerungsinformation hinterlegte Steuerungsparameter bestimmt werden, welche das Einstellen eines Betriebspunktes, der die maximal mögliche Menge an erzeugter elektrischer Energie der Stromerzeugungsanlage 150 begrenzt. Alternativ können diese Steuerungsparameter in dem Speicher 120 hinterlegt sein, wobei nach dem Ausgeben der bestimmten Steuerungsinformation die Vorrichtung 110 die Steuerungsparameter bestimmt und diese beispielsweise zusammen mit der Steuerungsinformation an die PMU 140 übermittelt.

Die PMU 140 kann beispielsweise ferner die einen oder mehreren Betriebspunkte der einen oder mehreren Stromerzeugungsanlagen auf die maximal mögliche Erzeugungsleistung an elektrischer Energie automatisch triggern, da die PMU 140 beispielsweise am selben Ort der Stromerzeugungsanlage 150 bzw. in deren unmittelbarer Nähe lokal angeordnet ist.

Zwischen dem SWOC-Server 130 und der PMU 140 ist beispielsweise eine Kommunikationsverbindung gemäß dem MODBUS-Standard, welche eine möglichst schnelle Verbindung mit niedriger Latenz ermöglicht.

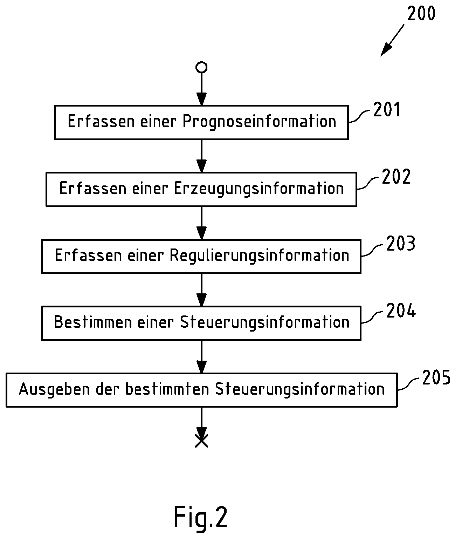

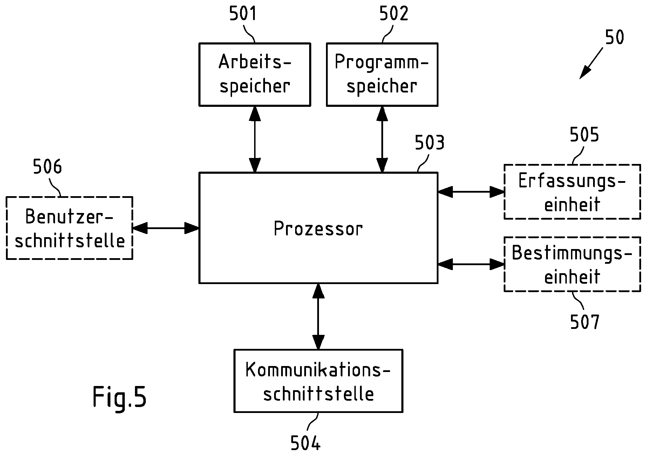

Fig. 2 zeigt ein Flussdiagramm 200 eines beispielhaften Verfahrens nach einem Ausführungsbeispiel. Das Flussdiagramm 200 kann beispielsweise von einer Vorrichtung gemäß Fig. 5 durchgeführt werden, wobei diese Vorrichtung beispielsweise die Vorrichtung 110 gemäß Fig. 1 ist.

In Schritt 201 erfolgt ein Erfassen einer Prognoseinformation. Die Prognoseinformation wird beispielsweise von der Vorrichtung 110 nach Fig. 1 durch einen Zugriff auf den Speicher 180, z. B. über den Server 170, erfasst.

In Schritt 202 erfolgt ein Erfassen einer Erzeugungsinformation. Die Erzeugungsinformation kann beispielsweise über das Kommunikationsnetz 160 von einem Drittanbieter, der die Erzeugungsinformation beispielsweise basierend auf einer Wetterprognose für die Stromerzeugungsanlage 150 nach Fig. 1 bestimmt, erfasst werden.

In Schritt 203 erfolgt ein Erfassen einer Regulierungsinformation. Die Regulierungsinformation wird beispielsweise von der Vorrichtung 110 nach Fig. 1 durch einen Zugriff auf den Speicher 180 nach Fig. 1, z. B. über den Server 170 nach Fig. 1, erfasst.

In Schritt 204 erfolgt ein Bestimmen einer Steuerungsinformation, z. B. durch die Vorrichtung 110 nach Fig. 1. Hierzu kann die Vorrichtung 110 nach Fig. 1 beispielsweise auf in dem Speicher 120 nach Fig. 1 hinterlegte Informationen (z. B. Prognoseinformation, Erzeugungsinformation, Regulierungsinformation, um einige nicht-limitierende Beispiele zu nennen) zugreifen.

In Schritt 205 erfolgt ein Ausgeben bzw. ein Veranlassen des Ausgebens einer bestimmten Steuerungsinformation. Das Ausgeben kann beispielsweise an eine oder mehrere Stromerzeugungsanlagen (z. B. Stromerzeugungsanlage 150 gemäß Fig. 1) erfolgen.

Die bestimmte Steuerungsinformation wird beispielsweise an die Stromerzeugungsanlage 150 nach Fig. 1 übermittelt, wobei zumindest teilweise basierend auf der ausgegebenen Steuerungsinformation einer oder mehrere Betriebspunkte der Stromerzeugungsanlage 150 nach Fig. 1 einstellbar sind.

Der Schritt des Erfassen (Schritt 201), der Schritt des können beispielsweise gleichzeitig, d.h. parallel ausgeführt werden. Anschließend kann beispielsweise der Schritt des Bestimmens der Steuerungsinformation erfolgen, wobei die Steuerungsinformation nach dem Bestimmen der Steuerungsinformation ausgegeben werden kann. Alternativ können der Schrit des Erfassens der Prognoseinformation (Schritt 201), der Schritt des Erfassens der Erzeugungsinformation (Schritt 202), und der Schritt des Erfassens der Regulierungsinformation (Schritt 203) hintereinander, d.h. sequentiell ausgeführt werden.

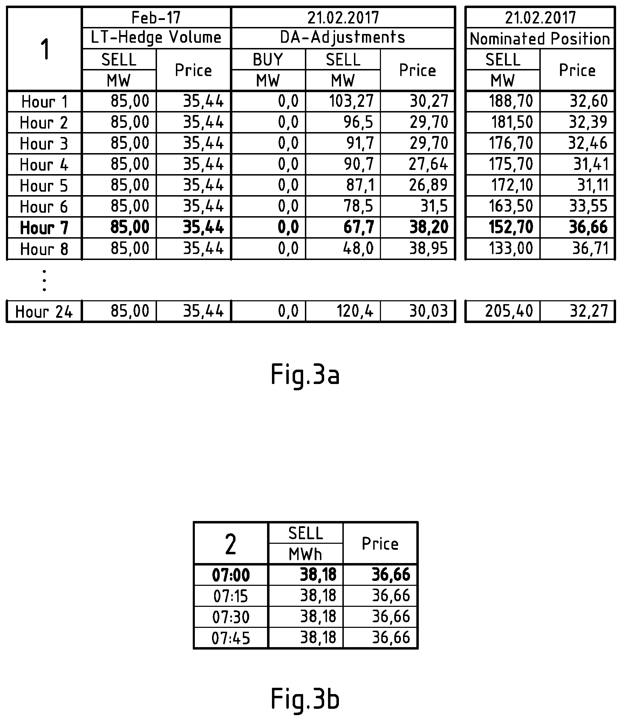

In den Fig. 3a-d ist jeweils eine beispielhafte Tabelle mit Informationen, welche in einem beispielhaften Verfahren nach einem Ausführungsbeispiel Anwendung finden, dargestellt.

Da in den Fig. 3a-d jeweils Werte aus den anderen Fig. 3a-d aufgegriffen werden, sind die jeweiligen aufgegriffenen Werte zur besseren Verständlichkeit in den jeweiligen Fig. 3a-d jeweils markiert, z. B. Zeilen- bzw. Abschnittsweise.

In Fig. 3a sind Prognoseinformation für jeweilige Zeiten dargestellt. Es sind Longterm-Prognoseinformation in den Spalten 2 und 3 dargestellt und in den Spalten 4 bis 6 sind Day-Ahead-Prognoseinformationen dargestellt. In Spalte 6 und Spalte 7 sind aufsummierte Werte der vorstehend angeführten Prognoseinformationen aufgeführt. Es ist zu erkennen, dass für den Zeitraum von 7:00 bis 8:00 152,7 MW Erzeugungsmenge an elektrischer Energie prognostiziert ist.

In Fig. 3b ist die jeweilige Erzeugungsmenge an elektrischer Energie für vorbestimmte Intervalle mit jeweils 15 Minuten Dauer angegeben. Dabei sind zur Erzeugung von beispielsweise 152,7 MW für die Stunde von 7:00 bis 8:00 in jeder Viertelstunde 38,18 MWh zu erzeugen.

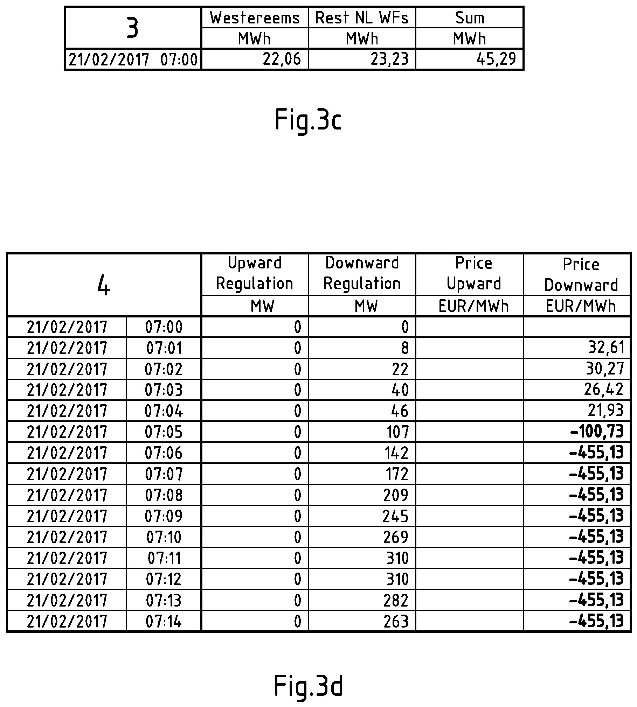

In Fig. 3c ist eine Erzeugungsinformation für das vorbestimmte Intervall von 7:00 bis 7:15 dargestellt, welche unmittelbar vor Beginn des vorbestimmten Intervalls prädiziert wurde, also beispielsweise um 6:59. Es ist zu erkennen, dass im Vergleich mit der Prognoseinformation gemäß Fig. 3b gemäß der Erzeugungsinformation 45,29 MWh erzeugte Menge an Strom erwartet werden.

In Fig. 3d ist die jeweils tatsächlich erzeugte Menge an elektrischer Energie für jede Minuten des vorbestimmten Intervalls, vorliegend von 7:00 bis 7:15 dargestellt. Die rechte Spalte von Fig. 3d stellt jeweils eine Regulierungsinformation dar, die jedoch entgegen der Darstellung mit zwei Minuten Verzögerung erfasst wird. Folglich ist die in der Zeile von Minute 7:05 dargestellte Regulierungsinformation erst um 7:07 verfügbar, so dass das Bestimmen der Steuerungsinformation erst bei erfasster Regulierungsinformation erfolgen kann. Im Gegensatz zu den Regulierungsinformationen gemäß der Minuten 7:00 bis 7:04 repräsentieren die Regulierungsinformation ab Minute 7:05 jeweils negative Preiswerte, welche indikativ für eine Sanktionierung durch den Ausgleichsenergiemarkt für eine Überproduktion an elektrischer Energie ist. Jede zu viel produzierte MWh an elektrischer Energie verursacht folglich gemäß des Preiswertes Sanktionierungskosten. Beispielsweise um diese zu minimieren, kann nach Kenntnis einer derartigen negativen Regulierungsinformation eine Steuerung und/oder Regelung von einer oder mehreren Stromerzeugungsanlagen erfolgen, um in der Folge diese Sanktionierungskosten beispielsweise zumindest zu minimieren.

Die folgenden Fälle i) und ii) sind exemplarisch ausgleichbar:
i) Die Stromerzeugungsanlagen erzeugen zu viel Strom:
   Runterregeln der Stromerzeugungsanlagen, bis auf maximal den minimum stable load der Stromerzeugungsanlagen;
ii) Die Stromerzeugungsanlagen erzeugen zu wenig Strom:
   Raufregeln der Stromerzeugungsanlagen, falls Stromerzeugungsanlagen noch nicht mit maximal möglicher Kapazität Strom erzeugt.

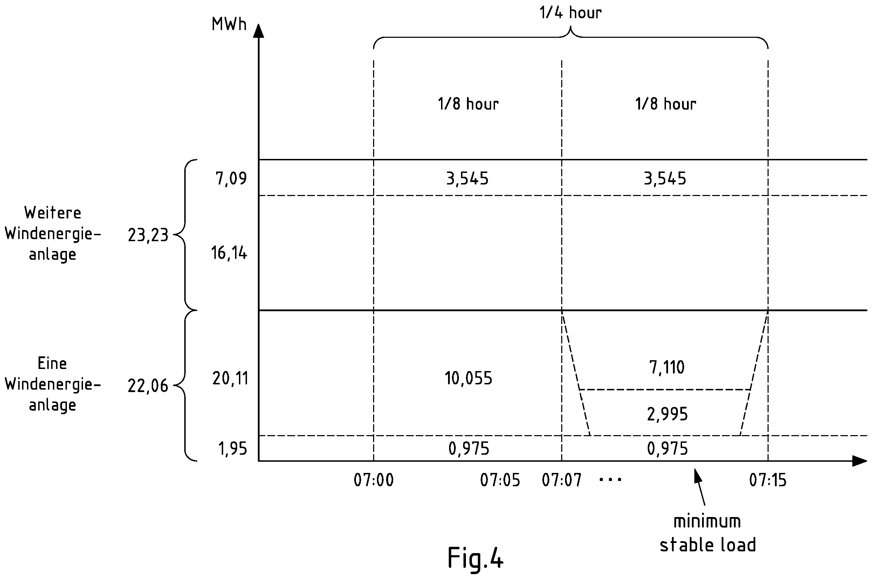

Ein Beispiel für eine Steuerung und/oder Regelung auf Basis der Informationen gemäß der Fig. 3a-d ist in Fig. 4 schematisch dargestellt.

Fig. 4 zeigt ein schematisches Diagramm, welches eine Menge an elektrischer Energie in Abhängigkeit von einem oder mehreren Betriebspunkten von einen oder mehreren Stromerzeugungsanlagen abbildet, wie es in einem beispielhaften Verfahren nach einem Ausführungsbeispiel Anwendung findet.

Bis zu der Minute 7:07 produzieren die Stromerzeugungsanlagen mit maximal möglicher Kapazität. Ab der Minute 7:07 erfolgt basierend auf einer bestimmten Steuerungsinformation (Schritt 204 gemäß Fig. 2) eine Steuerung und/oder Regelung der Stromerzeugungsanlage zum Einstellen eines Betriebspunktes, wobei in Fig. 4 exemplarisch zwei mögliche Varianten dargestellt sind, wobei bei der Ersten die Stromerzeugungsanlage beispielsweise auf 5% runtergefahren wird (in Fig. 4 gekennzeichnet mit dem Pfeil in den Kasten "minimum stable load"), so dass in der verbleibenden Dauer von dieser runtergefahrenen Stromerzeugungsanlage noch 0,975 MWh an elektrischer Energie produziert wird. Die zweite Möglichkeit wird durch die andere gestrichelte Linie schematisch dargestellt, wobei in der verbleibenden Dauer von dieser runtergefahrenen Stromerzeugungsanlage noch 2,995 MWh an elektrischer Energie produziert wird. Würde keine Steuerung und/oder Regelung der Stromerzeugungsanlage erfolgen, würde in der verbleibenden Dauer von dieser Stromerzeugungsanlage noch 7,110 MWh an elektrischer Energie produziert.

Die von dem Zeitpunkt von Minute 7:07 ausgehenden und diagonal verlaufenden Linien stellen schematisch das Verändern eines Betriebspunkte der Stromerzeugungsanlage dar. Zunächst wird die Stromerzeugungsanlage zumindest teilweise basierend auf der bestimmten Steuerungsinformation runtergefahren. Anschließend wird für einen gewissen Zeitraum mit entsprechend verringerter Kapazität der Stromerzeugungsanlage Strom erzeugt.

Ferner ist zu erkennen, dass rechtzeitig vor dem Ablauf des vorbestimmten Intervalls - hier von 7:00 bis 7:15 - die Stromerzeugungsanlage hochgefahren wird durch ein Verändern des Betriebspunktes auf 100% der maximal möglichen Erzeugungsleistung, wobei diese mit dem Ende des vorbestimmten Intervalls erreicht wird.

Fig. 5 zeigt eine schematische Darstellung einer beispielhaften Ausführungsform einer Vorrichtung 50, die im Kontext aller Aspekte eingesetzt werden kann.

Die Vorrichtung 50 kann beispielsweise ein gegenständliches Verfahren nach allen Aspekten ausführen und/oder steuern. Hierzu kann die Vorrichtung beispielsweise Mittel zum Ausführen und/oder Durchführen eines gegenständlichen Verfahrens nach allen Aspekten aufweisen und/oder umfassen. Das gegenständliche Verfahren nach allen Aspekten kann ferner von mehreren (d.h. zumindest zwei) Vorrichtungen 50 ausgeführt und/oder durchgeführt werden.

Die Vorrichtung 50 kann beispielsweise das Flussdiagramm 200 der Fig. 2 ausführen.

Die Vorrichtung 50 umfasst einen Prozessor 503 mit zugeordnetem Arbeitsspeicher 501 und Programspeicher 502. Der Prozessor 503 führt beispielsweise Programmanweisungen aus, die im Programmspeicher 502 gespeichert sind. Die Programmanweisungen führen das gegenständlicher Verfahren (z. B. gemäß der Schritte 201 bis 205 nach Fig. 2) aus und/oder steuern dieses. Damit enthält der Programmspeicher 502 ein Computerprogramm und stellt ein Computerprogrammprodukt zu dessen Speicherung dar. Vorrichtung 50 stellt ein Beispiel einer Vorrichtung eines Systems (z. B. das System 100 nach Fig. 1) dar.

Der Programmspeicher 502 kann beispielsweise ein persistenter Speicher, wie beispielsweise ein Read-Only-Memory (ROM)-Speicher sein. Der Programmspeicher 502 kann beispielsweise fest mit dem Prozessor 503 verbunden sein, kann aber alternativ auch lösbar mit dem Prozessor 503 verbunden sein, beispielsweise als Speicherkarte, Diskette, oder optisches Datenträgermedium (z.B. eine CD oder DVD). In dem Programmspeicher 502, oder in einem separaten Speicher, können auch weitere Informationen abgespeichert sein.

Der Arbeitsspeicher 501 wird beispielsweise zur Speicherung temporärer Ergebnisse während der Abarbeitung der Programmanweisungen genutzt, es handelt sich hierbei beispielsweise um flüchtigen Speicher, wie beispielsweise einen Random-Access-Memory (RAM)-Speicher.

Der Prozessor 503 ist ferner operativ mit einer Kommunikationsschnittstelle 504 verbunden, mit der beispielsweise ein Informationsaustausch mit anderen Vorrichtungen möglich ist (siehe z.B. die Pfeile in Fig. 1). Mittels der Kommunikationsschnittstelle 504 kann beispielsweise eine bestimmte Steuerungsinformation ausgegeben werden (Schritt 205 nach Fig. 2).

Die Vorrichtung 50 kann weitere Komponenten enthalten. Falls die Vorrichtung 50 die Vorrichtung zur Ausführung und/oder Durchführungen eines gegenständlichen Verfahren (z. B. Server 110 nach Fig. 1) repräsentiert, ist insbesondere eine Erfassungseinheit 505 vorgesehen, die beispielsweise zum Erfassen einer Prognoseinformation, einer Erzeugungsinformation, und/oder einer Regulierungsinformation (Schritte 201 bis 203 nach Fig. 2) eingerichtet ist und mit dem Prozessor 503 operativ verbunden ist. Ferner ist insbesondere eine Bestimmungseinheit 507 vorgesehen, die beispielsweise zum Bestimmen einer Steuerungsinformation (Schritt 204 nach Fig. 2) eingerichtet ist und mit dem Prozessor 503 operativ verbunden ist.

Optional kann die Vorrichtung 50 eine Benutzerschnittstelle 506 aufweisen, mittels der beispielsweise eine Wiedergabe von Informationen (z.B. eine optische Wiedergabe) möglich ist. Beispielsweise ist die Benutzerschnittstelle eine Displayvorrichtung (z.B. ein Liquid Crystal Display (LCD), oder ein Light Emitting Diode (LED)-Display oder dergleichen). Ferner können mittels der Benutzerschnittstelle 506 eine oder mehrere Eingaben eines Benutzers aufgenommen werden, z. B. mittels einer Tastatur, Maus, oder einer berührungsempfindlichen Displayvorrichtung.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zur Steuerung und/oder Regelung der Menge an erzeugter elektrischer Energie von einer oder mehreren Stromerzeugungsanlagen, durchgeführt von einer oder mehreren Vorrichtungen, umfassend:
- Erfassen einer Prognoseinformation indikativ für eine Menge an von einen oder mehreren Stromerzeugungsanlagen erzeugter elektrischer. Energie, die innerhalb eines vorbestimmten Intervalls erzeugt wird;
- Erfassen, einer Erzeugungsinformation repräsentativ für eine Menge an von .den einen oder mehreren Stromerzeugungsanlagen erzeugter elektrischer Energie, wobei die Menge an der erzeugten elektrische Energie der produzierten Menge an elektrischer Energie von den einen oder mehreren Stromerzeugungsanlagen innerhalb des vorbestimmten Intervalls entspricht und/oder unmittelbar für das vorbestimmte Intervall prädiziert ist;
- Erfassen einer Regulierungsinformation indikativ für eine Über- oder Unterproduktion von von den einen oder mehreren Stromerzeugungsanlagen erzeugter elektrischer Energie für das vorbestimmte Intervall für den Fall, dass das bestimmte Intervall noch nicht abgelaufen ist und die gemäß der Prognoseinformation zu erzeugende Menge elektrischer Energie bereits erzeugt wurde, und vice versa;
- Bestimmen einer Steuerungsinformation für den Fall, dass die Regulierungsinformation indikativ für eine Über- oder Unterproduktion ist, wobei die Steuerungsinformation indikativ für eine Steuerung und/oder Regelung der Menge an von den einen oder mehreren Stromerzeugungsanlagen erzeugter elektrischer Energie ist, wobei das Bestimmen der Steuerungsinformation zumindest teilweise basierend auf der erfassten Regulierungsinformation und auf der erfassten Erzeugungsinformation erfolgt, wobei basierend auf dem bestimmten Zeitpunkt, zu welchem die Regulierungsinformation erfasst ist, die verbleibende Zeit des vorbestimmten Intervalls bestimmt wird, wobei ein oder mehrere Betriebspunkte für die einen oder mehreren Stromerzeugungsanlagen derart bestimmt werden, dass für die verbleibende Zeit des vorbestimmten Intervalls die von den einen oder mehreren Stromerzeugungsanlagen erzeugte Menge an elektrischer Energie für das vorbestimmte Intervall zumindest eine bestimmte Differenz zwischen der Menge an erzeugter elektrischer Energie gemäß der Prognoseinformation und gemäß der Erzeugungsinformation einspart oder mehr erzeugt, wobei dieser bestimmte eine oder die bestimmten mehreren Betriebspunkte von der Steuerungsinformation umfasst sind, und
wobei basierend auf dem einen oder den mehreren Betriebspunkten zur Steuerung und/oder Regelung der einen oder mehreren Stromerzeugungsanlagen einer oder mehrere Steuerungsparameter für die eine oder mehreren Stromerzeugungsanlagen bestimmt werden, welche die einen oder mehreren Stromerzeugungsanlage auf den einen oder die mehreren Betriebspunkte einstellen; und
- Ausgeben oder Veranlassen des Ausgebens der bestimmten Steuerungsinformation, wobei basierend auf der bestimmten Steuerungsinformation eine Steuerung und/oder Regelung der einen oder mehreren Stromerzeugungsanlagen erfolgt.

2. Verfahren nach Anspruch 1, das Verfahren ferner umfassend:
- Erfassen einer Verfügbarkeitsinformation indikativ für eine Verfügbarkeit der einen oder mehreren Stromerzeugungsanlagen,
wobei die Steuerungsinformation ferner basierend auf der erfassten Verfügbarkeitsinformation bestimmt wird.

3. Verfahren nach Anspruch 1 oder Anspruch 2, wobei das Erfassen der Regulierungsinformation mit einer zeitlichen Verzögerung gegenüber dem Erfassen der Erzeugungsinformation erfolgt, und die verbleibende Zeit des vorbestimmten Intervalls ferner basierend auf der zeitlichen Verzögerung erfolgt.

4. Verfahren nach einem der vorhergehenden Ansprüche, wobei die Prognoseinformation zumindest eine Longterm-Prognoseinformation und zumindest eine Day-Ahead-Prognoseinformation umfassend, die zusammen summiert die Menge an von den einen oder mehreren Stromerzeugungsanlagen erzeugter elektrischer Energie, die innerhalb des vorbestimmten Intervalls erzeugt wird, umfasst.

5. Verfahren nach einem der vorhergehenden Ansprüche, wobei das Bestimmen der Steuerungsinformation diejenige Zeit berücksichtigt, die benötigt wird, um die einen oder mehreren Stromerzeugungsanlagen auf die bestimmten einen oder mehreren Betriebspunkte der einen oder mehreren Stromerzeugungsanlagen zu steuern und/oder zu regeln.

6. Verfahren nach Anspruch 5, wobei das Bestimmen der Steuerungsinformation ferner umfasst:
- Erfassen einer Restzeitinformation indikativ für eine Zeitdauer bis zu welchem Ablauf das Ausgeben oder das Veranlassen des Ausgebens der bestimmten Steuerungsinformation erfolgt sein muss, um die eine oder mehreren Stromerzeugungsanlage vor dem Ablauf des vorbestimmten Intervalls auf die maximal mögliche Erzeugungsmenge an elektrischer Energie der einen oder mehreren Stromerzeugungsanlagen zu steuern und/oder zu regeln,
wobei das Bestimmen der Steuerungsinformation ferner basierend auf der erfassten Restzeitinformation erfolgt.

7. Verfahren nach einem der vorhergehenden Ansprüche, wobei das Bestimmen der Steuerungsinformation ferner umfasst:
- Bestimmen einer Überschussinformation, wobei die Überschussinformation für den Fall, dass trotz maximal möglicher Erzeugungsmenge an elektrischer Energie der einen oder mehreren Stromerzeugungsanlagen die Menge an elektrischer Energie gemäß der Prognoseinformation nicht erzeugt wird, diejenigen Stromerzeugungsanlagen der einen oder mehreren Stromerzeugungsanlagen bestimmt, welche in der Menge an erzeugter elektrischer Energie reduziert werden, deren Sanktionierung die geringsten Kosten verursacht.

8. Verfahren nach einem der vorhergehenden Ansprüche, wobei der eine oder die mehreren Betriebspunkte eine untere Schranke aufweisen, die die minimal mögliche Erzeugungsleistung der jeweiligen Stromerzeugungsanlage nach unten begrenzen.

9. Verfahren nach einem der vorhergehenden Ansprüche, wobei die einen oder mehreren Stromerzeugungsanlagen eine oder mehrere Strom erzeugende Vorrichtungen umfassen, wobei die bestimmte Steuerungsinformation in Abhängigkeit eines jeweiligen Betriebspunktes der jeweiligen Strom erzeugenden Vorrichtungen den jeweiligen Betriebspunkt für die jeweiligen Strom erzeugende Vorrichtung festlegt, wobei der zumindest einen Betriebspunkt für die jeweiligen Strom erzeugenden Vorrichtung derart festgelegt ist, dass die einen oder mehreren Stromerzeugungsanlagen kumuliert die gemäß der Steuerungsinformation bestimmte Differenz zwischen der Menge an erzeugter elektrischer Energie gemäß der Prognoseinformation und gemäß der Erzeugungsinformation einsparen oder mehr erzeugen.

10. Verfahren nach einem der vorhergehenden Ansprüche, wobei die Steuerungsinformation ferner unter Berücksichtigung, dass die einen oder mehreren Betriebspunkte der einen oder mehreren Stromerzeugungsanlagen vor dem Ablauf des vorbestimmten Intervalls wieder auf die jeweils maximal mögliche Erzeugungsleistung an elektrischer Energie gesteuert und/oder geregelt ist, bestimmt.

11. Verfahren nach einem der vorhergehenden Ansprüche, wobei die einen oder mehreren Betriebspunkte der einen oder mehreren Stromerzeugungsanlagen auf die maximal mögliche Erzeugungsleistung an elektrischer Energie automatisch von den einen oder mehreren Stromerzeugungsanlagen zu einem Zeitpunkt, der vor dem Ablauf des vorbestimmten Intervalls liegt und derart bestimmt ist, dass mit dem Ablauf des vorbestimmten Intervalls der eine oder die mehreren Betriebspunkte der einen oder mehreren Stromerzeugungsanlage wieder auf die maximal mögliche Erzeugungsmenge an elektrischer Energie gesteuert und/oder geregelt ist, getriggert wird.

12. Verfahren nach einem der vorhergehenden Ansprüche, wobei die einen oder mehreren Stromerzeugungsanlagen Photovoltaikanlagen, Windenergieanlagen, Hydro- bzw. Wasserkraftanlagen, oder eine Kombination hiervon sind.

13. Verfahren nach einem der vorhergehenden Ansprüche, wobei das Bestimmen der Steuerungsinformation ferner umfasst:
- Bestimmen einer Vorhersageinformation indikativ für eine prädizierte Regùlierungsinformation für einen Zeitraum, der kürzer ist als die verbleibende Zeitdauer des vorbestimmten Intervalls, wobei die Vorhersageinformation basierend auf historischen Information bestimmt wird,
wobei die Steuerungsinformation ferner basierend auf der bestimmten Vorhersageinformation bestimmt wird.

14. System, umfassend eine oder mehrere Vorrichtungen, welche zusammen dazu ausgebildet und/oder eingerichtet sind, ein Verfahren nach einem der 1 bis 13 auszuführen.

15. System nach Anspruch 14, ferner umfassend eine oder mehrere Stromerzeugungsanlagen, welche dazu ausgebildet und/oder eingerichtet sind, basierend auf einer von den einen oder mehreren Vorrichtungen bestimmten und ausgegebenen Steuerungsinformation einen oder mehrere Betriebspunkte einzustellen.

## Claims

1. A method of controlling and/or regulating the amount of electrical energy generated by one or more power generation systems performed by one or more devices, comprising:
- obtaining a forecast information indicative of an amount of electrical energy to be generated by one or more power generating plants within a predetermined interval;
- obtaining a generation information indicative of an amount of electrical energy generated by the one or more power generating plants, wherein said amount of generated electrical energy to said amount of electrical energy generated by said one or more power generating plants within said predetermined interval and/or is directly predicted for said predetermined interval;
- obtaining a regulation information indicative of over- or underproduction of electrical energy generated by the one or more power generating plants for a given time within the predetermined interval in the event that the predetermined interval has not yet expired and the amount of electrical energy to be generated according to the forecast information has already been generated, and vice versa;
- determining a control information in the event that the regulation information is indicative of over- or underproduction, wherein the control information is indicative of a control and/or regulation of the amount of electrical energy generated by the one or more power generating plants, wherein the determining of the control information is at least partially based on the obtained regulation information and on the obtained generation information, wherein based on the determined time at which the regulation information is obtained, the remaining time of the predetermined interval is determined, wherein one or more operating points for the one or more power generating plants are determined such that for the remaining time of the predetermined interval, the amount of electrical energy generated by the one or more power generating plants for the predetermined interval saves or generates at least one determined difference between the amount of electrical energy generated according to the forecast information and according to the generation information, and wherein said determined one or more operating points are comprised by the control information, and
wherein, based on the one or more operating points for controlling and/or regulating the one or more power generating plants, one or more control parameters for the one or more power generating plants are determined, which set the one or more power generating plants to the one or more operating points; and
- outputting or causing the outputting of the determined control information, wherein, based on the determined control information, a control and/or regulation of the one or more power generating plants is carried out.

2. The method according to claim 1, the method further comprising:
- obtaining an availability information indicative of the availability of one or more power generating plants,
wherein the control information is further determined based on the obtained availability information.

3. The method according to claim 1 or claim 2, wherein the obtaining of the regulation information is performed with a time delay to the obtaining of the generation information, and the remaining time of the predetermined interval is based on the time delay.

4. The method according to any one of the preceding claims, wherein the forecast information comprises at least one long-term forecast information and at least one day-ahead forecast information which together totals the amount of electrical energy generated by the one or more power generating plants which is generated within the predetermined interval.

5. The method according to any one of the preceding claims, wherein the determining of the control information takes into account the time required to control and/or regulate the one or more power generating plants to the determined one or more operating points of the one or more power generating plants.

6. The method of claim 5, wherein the determining of the control information further comprises:
- obtaining a remaining time information indicative of a time period until which the output or the causing of the output of the determined control information must have taken place in order to control and/or regulate the one or more power generating plants to the maximum possible generation amount of electrical energy of the one or more power generating plants before the expiry of the predetermined interval,
wherein the determining of the control information is further based on the obtained remaining time information.

7. The method according to any one of the preceding claims, wherein the determining of the control information further comprises:
- determining of a surplus information, wherein the surplus information determines those power generating plants of the one or more power generating plants which are to be reduced in the amount of generated electrical energy and which sanctioning causes the lowest costs, in the case that despite the maximum possible amount of generated electrical energy of the one or more power generating plants the amount of electrical energy is not generated according to the forecast information.

8. The method according to any one of the preceding claims, wherein the one or more operating points have a lower limit which limits the minimum possible generating capacity of the respective power generating plant downwards.

9. The method according to any one of the preceding claims, wherein the one or more power generating plants comprise one or more power generating apparatuses, wherein the determined control information sets the respective operating point for the respective power generating apparatus in dependence on the operating points of the respective power generating plants, wherein the at least one operating point for the respective power generating plant is determined in such a way that the one or more power generating plants cumulatively save or generate more the difference of the amount of generated electric energy according to the generation information that is determined between the control information and the forecast information.

10. The method according to any one of the preceding claims, wherein the control information further determines, taking into account that the one or more operating points of the one or more power generating plants is controlled and/or regulated again to the respective maximum possible generation power of electrical energy before the expiry of the predetermined interval.

11. The method according to any one of the preceding claims, wherein the one or more operating points of the one or more power generating plants are automatically triggered to the maximum possible generation output of electrical energy by the one or more power generating plants at a point in time which lies before the expiry of the predetermined interval and is determined in such a way that with the expiry of the predetermined interval the one or more operating points of the one or more power generating plants are again controlled and/or regulated to the maximum possible generation output of electrical energy.

12. The method according to any one of the preceding claims, wherein the one or more power generating plants are photovoltaic plants, wind energy plants, hydroelectric- or hydrodynamic power-plants, or a combination thereof.

13. The method according to any one of the preceding claims, wherein the determining of the control information further comprises:
- determining a prediction information indicative of a predicted regulation information for a period shorter than the remaining period of the predetermined interval, wherein the prediction information is determined based on historical information,
wherein the control information is further determined based on the determined prediction information.

14. A system comprising one or more apparatuses which together are configured and/or arranged to perform a method according to any one of 1 to 13.

15. A system according to claim 14, further comprising one or more power generating plants which are configured and/or arranged to set one or more operating points based on control information determined and output by the one or more apparatuses.

## Revendications

1. Procédé de commande et/ou de régulation de la quantité d'énergie électrique produite par une ou plusieurs installations de production d'électricité, exécuté par un ou plusieurs dispositifs, comprenant :
- acquérir une information de prévision indicative d'une quantité d'énergie électrique produite par une ou plusieurs installations de production d'électricité, qui est produite dans un intervalle prédéterminé ;
- acquérir une information de production représentative d'une quantité d'énergie électrique produite par l'une ou les plusieurs installations de production d'électricité, la quantité d'énergie électrique produite correspondant à la quantité d'énergie électrique produite par l'une ou les plusieurs installations de production d'électricité dans l'intervalle prédéterminé et/ou étant directement prédite pour l'intervalle prédéterminé ;
- acquérir une information de régulation indicative d'une surproduction ou d'une sous-production d'énergie électrique produite par l'une ou les plusieurs installations de production d'électricité pour l'intervalle prédéterminé dans le cas où l'intervalle prédéterminé n'a pas encore expiré et où la quantité d'énergie électrique à produire selon l'information de prévision a déjà été produite, et vice-versa ;
- déterminer une information de commande pour le cas où l'information de régulation est indicative d'une surproduction ou d'une sous-production, l'information de commande étant indicative d'une commande et/ou d'une régulation de la quantité d'énergie électrique produite par l'une ou les plusieurs installations de production d'électricité, la détermination de l'information de commande ayant lieu au moins en partie sur la base de l'information de régulation acquise et de l'information de production acquise, le temps restant de l'intervalle prédéterminé étant déterminé sur la base de l'instant déterminé auquel l'information de régulation est acquise, un ou plusieurs points de fonctionnement pour l'une ou les plusieurs installations de production d'électricité étant déterminés de sorte que, pour le temps restant de l'intervalle prédéterminé, la quantité d'énergie électrique produite par l'une ou les plusieurs installations de production d'électricité pour l'intervalle prédéterminé économise au moins une différence déterminée entre la quantité d'énergie électrique produite selon l'information de prévision et selon l'information de production ou produit davantage, lesdits un ou plusieurs points de fonctionnement déterminés étant compris dans les informations de commande, et un ou plusieurs paramètres de commande étant déterminés pour lesdites une ou plusieurs installations de production d'électricité sur la base desdits un ou plusieurs points de fonctionnement pour la commande et/ou la régulation desdites une ou plusieurs installations de production d'électricité, lesquels paramètres règlent lesdites une ou plusieurs installations de production d'électricité auxdits un ou plusieurs points de fonctionnement ; et
- émettre ou faire émettre l'information de commande déterminée, une commande et/ou une régulation de l'une ou des plusieurs installations de production d'électricité ayant lieu sur la base de l'information de commande déterminée.

2. Procédé selon la revendication 1, le procédé comprenant en outre :
- acquérir une information de disponibilité indicative d'une disponibilité de l'une ou des plusieurs installations de production d'électricité, l'information de commande étant en outre déterminée sur la base de l'information de disponibilité acquise.

3. Procédé selon la revendication 1 ou la revendication 2, dans lequel l'acquisition de l'information de régulation a lieu avec un retard temporel par rapport à l'acquisition de l'information de production, et le temps restant de l'intervalle déterminé a en outre lieu sur la base du retard temporel.

4. Procédé selon l'une quelconque des revendications précédentes, dans lequel les informations de prévision comprennent au moins des informations de prévision à long terme et au moins des informations de prévision à court terme (day-ahead) qui, additionnées ensemble, comprennent la quantité d'énergie électrique produite par l'une ou les plusieurs installations de production d'électricité qui est produite dans l'intervalle prédéterminé.

5. Procédé selon l'une quelconque des revendications précédentes, dans lequel la détermination de l'information de commande prend en compte le temps nécessaire pour commander et/ou réguler l'une ou les plusieurs installations de production d'électricité aux un ou plusieurs points de fonctionnement déterminés de l'une ou des plusieurs installations de production d'électricité.

6. Procédé selon la revendication 5, dans lequel la détermination de l'information de commande comprend en outre :
- acquérir une information de temps résiduel indicative d'une durée jusqu'à l'expiration de laquelle l'émission ou le déclenchement de l'émission de l'information de commande déterminée doit avoir eu lieu, afin de commander et/ou de réguler la ou les plusieurs installations de production d'électricité à la quantité maximale possible de production d'énergie électrique de l'une ou des plusieurs installations de production d'électricité avant l'expiration de l'intervalle prédéterminé, la détermination de l'information de commande ayant en outre lieu sur la base de l'information de temps résiduel acquise.

7. Procédé selon l'une quelconque des revendications précédentes, dans lequel la détermination de l'information de commande comprend en outre :
- déterminer une information d'excédent, l'information d'excédent déterminant, dans le cas où, malgré la quantité maximale possible de production d'énergie électrique de l'une ou des plusieurs installations de production d'électricité, la quantité d'énergie électrique selon l'information de prévision n'est pas produite, les installations de production d'électricité de l'une ou des plusieurs installations de production d'électricité qui sont réduites dans la quantité d'énergie électrique produite, dont la sanction entraîne les coûts les plus faibles.

8. Procédé selon l'une des revendications précédentes, dans lequel le ou les points de fonctionnement présentent une limite inférieure qui limite vers le bas la puissance de production minimale possible de l'installation de production d'électricité respective.

9. Procédé selon l'une quelconque des revendications précédentes, dans lequel l'une ou les plusieurs installations de production d'électricité comprennent un ou plusieurs dispositifs de production d'électricité, dans lequel l'information de commande déterminée définit, en fonction d'un point de fonctionnement respectif des dispositifs de production d'électricité respectifs, le point de fonctionnement respectif pour le dispositif de production d'électricité respectif, l'au moins un point de fonctionnement pour les dispositifs de production d'électricité respectifs étant définit de telle sorte que la ou les plusieurs installations de production d'électricité économisent ou produisent davantage, de manière cumulée, la différence déterminée selon l'information de commande entre la quantité d'énergie électrique produite selon l'information de prévision et selon l'information de production.

10. Procédé selon l'une des revendications précédentes, dans lequel l'information de commande est en outre déterminée en tenant compte du fait que l'un ou les plusieurs points de fonctionnement de l'une ou des plusieurs installations de production d'électricité sont à nouveau commandés et/ou régulés à la puissance de production d'énergie électrique maximale possible respective avant l'expiration de l'intervalle prédéfini.

11. Procédé selon l'une des revendications précédentes, dans lequel l'un ou les plusieurs points de fonctionnement de l'une ou des plusieurs installations de production d'électricité sont déclenchés automatiquement par l'une ou les plusieurs installations de production d'électricité à la puissance de production d'énergie électrique maximale possible, à un moment qui se situe avant l'expiration de l'intervalle prédéterminé et qui est déterminé de telle sorte qu'à l'expiration de l'intervalle prédéterminé, l'un ou les plusieurs points de fonctionnement de l'une ou des plusieurs installations de production d'électricité sont à nouveau commandés et/ou régulés à la quantité de production d'énergie électrique maximale possible.

12. Procédé selon l'une quelconque des revendications précédentes, dans lequel la ou les plusieurs installations de production d'électricité sont des installations photovoltaïques, des installations éoliennes, des installations hydroélectriques ou hydrauliques, ou une combinaison de celles-ci.

13. Procédé selon l'une quelconque des revendications précédentes, dans lequel la détermination de l'information de commande comprend en outre :
- déterminer une information de prédiction indicative d'une information de régulation prédite pour une période de temps plus courte que la période de temps restante de l'intervalle prédéterminé, l'information de prédiction étant déterminée sur la base d'une information historique, l'information de commande étant en outre déterminée sur la base de l'information de prédiction déterminée.

14. Système comprenant un ou plusieurs dispositifs qui, ensemble, sont conçus et/ou configurés pour exécuter un procédé selon l'une des revendications 1 à 13.

15. Système selon la revendication 14, comprenant en outre une ou plusieurs installations de production d'électricité qui sont conçues et/ou configurées pour ajuster un ou plusieurs points de fonctionnement sur la base d'une information de commande déterminée et émise par l'un ou les dispositifs.
